## Europäisches Patentamt

## European Patent Office

## Office européen des brevets

(11) Publication number: **0 235 099**
**B1**

## EUROPEAN PATENT SPECIFICATION

(45) Date of publication of patent specification: **06.06.90**

(51) Int. Cl.[5]: **C 01 F 7/04**

(21) Application number: **87830066.4**

(22) Date of filing: **25.02.87**

(54) **A process for fabricating lithium aluminate in gamma phase.**

(30) Priority: **26.02.86 IT 4769486**

(43) Date of publication of application:
**02.09.87 Bulletin 87/36**

(45) Publication of the grant of the patent:
**06.06.90 Bulletin 90/23**

(84) Designated Contracting States:
**BE DE FR GB NL**

(56) References cited:
**JOURNAL OF THE AMERICAN CHEMICAL SOCIETY, vol. 90, no. 8, 10th April 1968, pages 2020-2022; C.H. CHANG et al.: "High-pressure-high-temperature syntheses. III. Direct syntheses of new high-pressure forms of LiA1O2 and LiGaO2 and polymorphism in LiMO2 compounds (M = B,Al,Ga)1a"**

(73) Proprietor: **ENEA COMITATO NAZIONALE PER LA RICERCA E PER LO SVILUPPO DEL L'ENERGIA NUCLEARE E DELLE ENERGIE ALTERNATIVE
Viale Regina Margherita 125
I-00198 Roma (IT)**

(72) Inventor: **Alvani, Carlo
Via Colle degli Ulivi A/8
I-00061 Anguillara Sabazia Roma (IT)**
Inventor: **Casadio, Sergio
Via degli Oleandri 11
I-00061 Anguillara Sabazia Roma (IT)**

(74) Representative: **Sarpi, Maurizio
Studio FERRARIO Via Collina, 36
I-00187 Roma (IT)**

(56) References cited:
**AMERICAN CERAMIC SOCIETY BULLETIN, vol. 60, no. 6, June 1981, pages 629-635, Columbus, Ohio, US; R.N. SINGH et al.: "Fabrication and properties of a porous lithium aluminate electrolyte retainer for molten carbonate fuel cells"**

Courier Press, Leamington Spa, England.

## Description

This invention concerns a process for obtaining gamma-LiAlO$_2$ article when starting from lithium peroxide and alumina powders, which process has novel characteristics with respect to the conventional techniques.

Gamma-LiAlO$_2$ powder is produced and distributed by Cerac Inc. (Cerac 1139 L-100 mesh-99,9%, nuclear grade). As such, however, the above powder has very bad sintering characteristics, grain size of some tenths of a micrometre and a specific surface lower than one m$^2$/g. Many preparatory methods have been however developed and published in the literature, specifically we list below the USA Agencies that dealt with this development and the related references or patents:

Argonne National Laboratory (J. Nucl. Mat., 103, 104 (1981) 579;

GA Technologies Inc. (U.S. Pat. No. 339697 15/01/82 McDonnell Douglas Astronautic Company (J. Nucl. Mat. 103—104 (1981) 579);

Westinghouse El. Corp. (HELD-SA-2594-FP).

All the methods above are characterized by the use of salts or oxide (either hydrated or not as lithium-containing precursors and by a high (higher than 900°C) calcining temperature for stabilizing LiAlO$_2$ in the gamma phase.

The process of this invention utilizes a specifically reactive precursor, lithium peroxide (Li$_2$O$_2$), which is mixed with microspheres of alumina (gamma phase) in anhydrous ethyl alcohol. The two reagents are dried in a rotating evaporator (with a temperature lower than 100°C) whereby an intimate mixture of the two components is obtained. The powder after calcination at 700°C for two hours produces LiAlO$_2$ in the gamma phase with a high specific surface (30 m$^2$/g with respect to one m$^2$/g of the trade products). A subsequent cold pressing (2 tons/cm$^2$) and a rapid sintering (1300°C for two hours) produce a lithium aluminate in gamma phase which has a very high purity (99,9% gamma phase), a high specific surface or density (90% theoretical); high intercommunicating porosity (10%) large particle dimensions (0,5—5 micrometers).

The solution of preparing the LiAlO$_2$ precursor mixture by the mixing of Li$_2$O$_2$ and gamma-Al$_2$O$_3$ according to the process of this invention is now known in the prior art.

For example, C. H. Chang et al. in the Journal of the American Chemical Society, vol. 90, no. 8, 10th April 1968, pages 2020—2022, describes the formation of gamma-LiAlO$_2$ by the direct reaction of lithium peroxide Li$_2$O$_2$ with alumina without indication of the type of alumina to be employed nor of the manner in which the lithium peroxide and alumina are mixed.

From the American Ceramic Society Bulletin, vol. 60, No. 6, June 1981, pages 629—635, Columbus, Ohio, US; R. N. Singh et al., it is also known the preparation of sintered bodies of gamma-LiAlO$_2$ in two steps: firstly alpha-LiAlO$_2$ powder is prepared by the reaction of Li$_2$CO$_3$ with gamma-Al$_2$O$_3$ at 873 K. This is followed by a conversion to the gamma-form by treatment at 1173 K to yield a powder which has a maximum surface area of 10 m$^2$/g. The powders were pressed and thereafter sintered.

With the process according to Singh, it is possible, however, to obtain gamma-LiAlO$_2$ sintered articles having a maximum density of 1,46 while with the process according to the present invention a maximum density of 2,36 is achieved.

With respect to conventional processes wherein lithium carbonate is utilized as a precursor, the present process requires extremely limited calcination times at the same temperature and also lower times at lower temperatures (tenths of hours at 650°C and two-three hours at 900°C). Contrary to sol-gel techniques this process is particularly simple. Furthermore, while the spherical particles produced through conventional gelation methods require long millings, the material produced by the present process is a lamellar material of which the milling and pressing steps are simple.

The process of the present invention involves in general ceramic material technologies in the field of energy (fusion, batteries etc.).

In particular those technologies which are connected to the tritium cycle in the nuclear technologies are interested by the present process.

This invention will be clearer from the following description and from the annexed figures which relate to a preferred embodiment of the invention. In the drawings:

Figure 1 illustrates an electron micrograph of the lamellar morphology in the case of a pure gamma phase LiAlO$_2$ artifact obtained by the method of the present invention. It is a micrograph (100×) of a sintered material at 90% of the theoretical density.

Figure 2 shows the distribution of the pore diameters obtained by a mercury porosity of a pure gamma phase LiAlO$_2$ artifact obtained by the method of this invention. Along the ordinate the percentage of the total porosity is shown while along the abscissa the diameter in micrometres is shown.

Figs. 3a, 3b illustrate the reaction temperature between Li$_2$O$_2$ and Al$_2$O$_3$ together with the percentage weight loss of the complex Al$_2$O$_3$+LiO$_2$. In figure 3a the temperature in celsius degrees is reported along the abscissa while along ordinate arbitrary units are reported for the signals related to thermodifferential analysis (DTA) and to thermogravimetric differential analysis (DTG).

In Fig. 3b along the abscissa the temperature is marked while along the ordinate the percentage loss of weight is marked.

In Fig. 4 the diffractometric analyses are illustrated of the mixture Al$_2$O$_3$+Li$_2$O$_2$ at various thermal treatments from which it results that starting from 600°C the gamma phase is already attained after a one hour calcination.

Precursors of the product

a) Alumina ($Al_2O_3$ (gamma phase)) as a powder of high specific surface (greater than 100 $m^2/g$) and of high purity (99.9%), the same as the trade product Degussa Type C.

b) Lithium peroxide ($Li_2O_2$) prepared according to Bach and Baardmann Jr. (USA Patent No. 3185546 (1965) or a trade product by Cerac Inc.

Process description

1. Mixing-drying

$Li_2O_2$ and $Al_2O_3$ as very pure alumina spheres (99.9%) are mixed in a quantity close to stoichiometric (a slight excess of the former) in liquid phase with anhydrous ethanol in a rotating evaporator, while heating and subjecting to vacuum. An anhydrous mixed powder is thus obtained which contains the two precursors closely mixed.

2. Synthesis

The mixture obtained at the preceding point is calcined inside a pure (99.9%) alumina containers at 700°C for two hours.

A very fine gamma phase lithium aluminate is obtained from the above synthesis as is shown from the diffraction analysis by X-rays. Particularly the specific surface of this powder is 30±5 $m^2/g$.

3. Forming, pressing and sintering

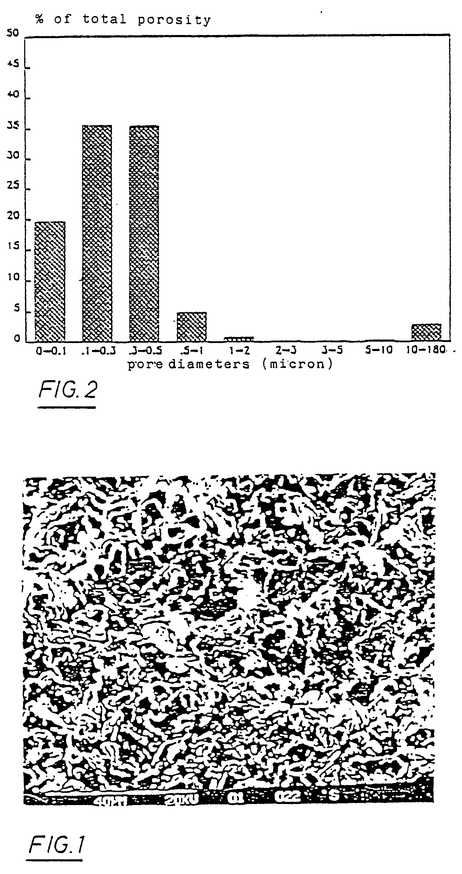

The powder as obtained at the preceding point when mixed stearic acid (2%) is cold pressed at 2 tons/cm² and then sintered in a rapid heating furnace at 1300°C for two hours. An artifact is thus obtained of pure gamma phase $LiAlO_2$ (by X-ray diffraction) of which the morphology or form is shown in Fig. 1 and the open porosity is as much as 10±2% and is characterized by a distribution of the pores as shown in Fig. 2 obtained by a mercury porosimeter. The density of this artifact is 2.36±0.02 $g/cm^3$ equal to 90% with respect to the theoretical density of the lithium aluminate in gamma phase (2.615 $g/cm^3$).

4. Essential characteristics of the artifact

The obtained material is a solid ceramic material having a density of 90% with respect to the theoretical; its hollow fraction (10%) is essentially comprised of an open porosity in the range ±2%; the grain size, of the lamellar type is of the order of the micrometre; it is comprised of pure gamma phase $LiAlO_2$ (by X-ray diffraction).

The geometry form of the artifact generically is a pellet which can be utilized as a tritium generator in nuclear technology.

5. Novel factors of the present invention are as follows:

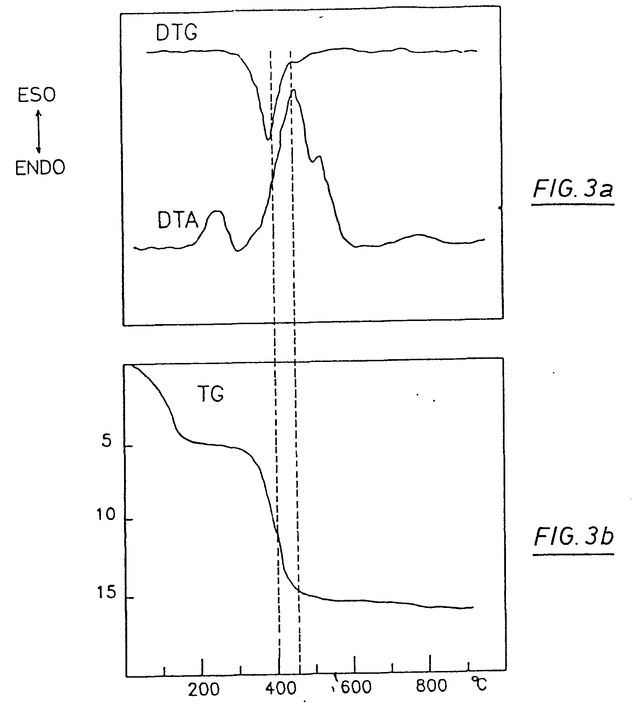

The low temperature of the reaction between $Li_2O_2$ and $Al_2O_3$ which furthermore occurs by means of an exothermic process (see the annexed thermal analysis which is shown in Fig. 3) which occurs at 400—450°C with the formation of $LiAlO_2$ in the beta phase.

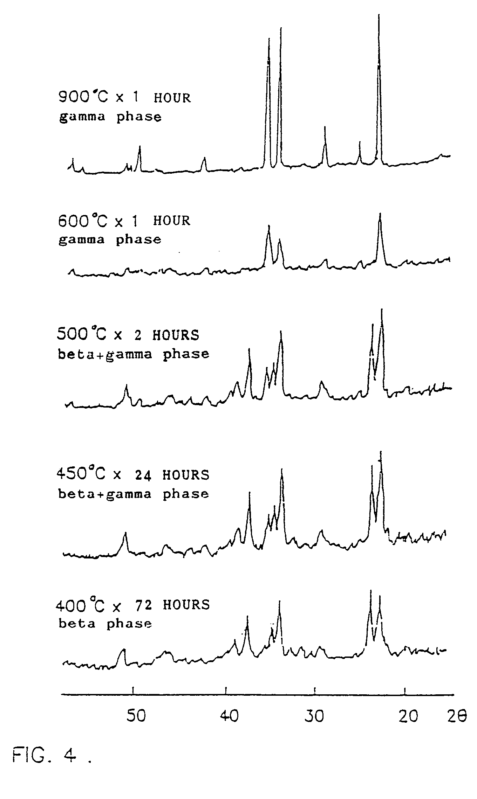

A low temperature calcination to form and stabilise the gamma phase is obtainable by treating the mixture $Li_2O_2+Al_2O_3$ for one hour at 700°C (see Fig. 4 the X-ray diffraction analysis from various thermal treatments of the above mixture whereby this point is favoured).

6. Particular characteristics of the obtainable artifact

The process of forming, pressing and sintering comprises the cold pressing (2 tons/cm²) which is followed by sintering (2 hours at 1300°C in rapid heating furnace).

The texture of morphology of the sintered material (as reported at Fig. 1 wherein the image is obtained by means of an electron microscope) is characterized by lamellar particles of the size of about a micrometre which are bound together while keeping an open and intercommunicating porosity, as shown in Fig. 2 from the porosimetric analysis obtained by a mercury porosimeter; the vacuum fraction of such porosity corresponds to 10±2% the volume occupied by the artifact.

The apparent density (that is not corrected by the vacuum fraction caused by porosity) is equal to 90±2% of the theoretical density of gamma phase lithium aluminate.

**Claims**

1. A process for producing a gamma lithium aluminate article which process comprises the following steps:

providing lithium peroxide and gamma alumina;

mixing said lithium peroxide and said alumina in a liquid phase at room temperature with anhydrous ethanol; applying heat and a vacuum to obtain an anhydrous mixture;

calcining said mixture;

mixing the calcination product (lithium aluminate) with stearic acid and cold-pressing the calcination product/stearic acid mixture;

sintering in a furnace.

2. A process as claimed in claim 1 wherein the mixing of lithium peroxide and alumina occurs in a quantity which is near to the stoichiometric ratio of the same compounds for the formation of lithium aluminate.

3. A process as claimed in claim 2 wherein in said nearly-stoichiometric ratio, the content of $Li_2O_2$ is slightly in excess with respect to $Al_2O_3$.

4. A process as claimed in claim 1 wherein said mixing of $Li_2O_2$ plus $Al_2O_3$ plus anhydrous ethanol occurs in a rotating evaporator.

5. A process as claimed in claim 1 wherein said alumina comprises very pure spheres of which the alumina content is equal or greater than 99.9%.

6. A process as claimed in claim 1 wherein said heating occurs at a temperature lower than 100°C.

7. A process as claimed in claim 1 wherein said vacuum is included within the range which is normal for rotary pumps.

8. A process as claimed in claim 1 wherein said stearic acid weight is two per cent with respect to the total weight of said anhydrous mixture.

9. A process as claimed in claim 1 wherein said calcination product is cold pressed at the pressure of 2 tons per square centimeter.

10. A process as claimed in claim 1 wherein the sintering of said mixture of $Li_2O_2$ plus $Al_2O_3$ plus stearic acid occurs in a rapid heating furnace at the temperature of 1300°C for two hours.

11. A process as claim 1 wherein said calcination occurs in vessels made of 99.9 pure alumina and lasts for two hours at 700°C.

12. A lithium aluminate article prepared by the process as claimed in the preceding claims from a powder containing at least 99.9% gamma phase and a specific surface of at least 30 $m^2/g$ and having a grain shape of lamellar type and a grain size of the order of about a micrometer; the article having a density with respect to the theoretical of 90%±2, an open porosity equal to 10%±2 and comprising gamma $LiAlO_2$ as detectable through X-ray diffraction.

13. A lithium aluminate article as claimed in the preceding claims having the form of pellets.

**Patentansprüche**

1. Verfahren zur Herstellung eines Gamma-Lithiumaluminatgegenstandes, wobei das Verfahren die folgenden Schritte aufweist:
Bereitstellen von Lithiumperoxid und Gamma-Aluminiumoxid;
Mischen des Lithiumperoxids und des Aluminiumoxids in einer flüssigen Phase bei Raumtemperatur mit wasserfreiem Ethanol;
Erhitzen und Anlegen eines Vakuums, um eine wasserfreie Mischung zu erhalten;
Calcinieren dieser Mischung;
Mischen des Calcinierungsproduktes (Lithiumaluminat) mit Stearinsäure und Kaltpressen des Calcinierungsproduktes/Stearinsäuregemisches;
Sintern in einem Ofen.

2. Verfahren nach Anspruch 1, wobei das Mischen von Lithiumperoxid und Aluminiumoxid in einer Menge erfolgt, welche nahe am stöchiometrischen Verhältnis dieser Verbindungen zur Bildung von Lithiumaluminat liegt.

3. Verfahren nach Anspruch 2, wobei in diesem beinahe-stöchiometrischen Verhältnis der Gehalt an $Li_2O_2$ den von $Al_2O_3$ leicht übersteigt.

4. Verfahren nach Anspruch 1, wobei das Mischen von $Li_2O_2$ plus $Al_2O_3$ plus wasserfreies Ethanol in einem Rotationsverdampfer erfolgt.

5. Verfahren nach Anspruch 1, wobei das Aluminiumoxid aus sehr reinen Kugeln besteht, deren Aluminiumoxidgehalt größer gleich 99,9% ist.

6. Verfahren nach Anspruch 1, wobei das Erhitzen bei einer Temperatur von geringer als 100°C erfolgt.

7. Verfahren nach Anspruch 1, wobei sich das Vakuum in dem Bereich befindet, welcher für Rotationspumpen normal ist.

8. Verfahren nach Anspruch 1, wobei das Stearinsäuregewicht 2% beträgt, bezogen auf das Gesamtgewicht der wasserfreien Mischung.

9. Verfahren nach Anspruch 1, wobei das Calcinierungsprodukt bei einem Druck von 2 Tonnen pro $cm^2$ kaltgepresst wird.

10. Verfahren nach Anspruch 1, wobei das Sintern der Mischung aus $Li_2O_2$ plus $Al_2O_3$ plus Stearinsäure in einem schnellheizenden Ofen bei einer Temperatur von 1300°C für 2 Stunden erfolgt.

11. Verfahren nach Anspruch 1, wobei die Calcinierung in Behältern aus 99,9% reinem Aluminiumoxid erfolgt und 2 Stunden lang bei 700°C dauert.

12. Lithiumaluminatgegenstand, hergestellt durch das Verfahren nach einem der vorhergehenden Ansprüche aus einem Pulver, welches wenigstens 99,9% der Gamma-Form enthält und eine spezifische Oberfläche von wenigstens 30 $m^2/g$ und eine lamellare Kornform aufweist und eine Korngröße im Bereich von etwa 1 µm, wobei der Gegenstand eine Dichte bezüglich des theoretischen Wertes von 90%±2 besitzt, eine offene Porosität aufweist, die gleich 10%±2 ist und Gamma-$LiAlO_2$, nachgewiesen durch Röntgenbeugung, enthält.

13. Lithiumaluminatgegenstand nach einem der vorangehenden Ansprüche in Form von Pellets.

**Revendications**

1. Un procédé de fabrication d'un article en aluminate de lithium gamma, ledit procédé comprenant les étapes suivantes:
prendre du peroxyde de lithium et de l'alumine gamma;
mélanger ledit peroxyde de lithium et ladite alumine dans une phase liquide à la température ambiante avec de l'éthanol anhydre;
appliquer de la chaleur et un vide pour obtenir un mélange anhydre;
calciner ledit mélange;
mélanger le produit de calcination (aluminate de lithium) avec de l'acide stéarique et soumettre le mélange produit de calcination/acide stéarique à une compression à froid;
fritter dans un four.

2. Un procédé selon la revendication 1, dans lequel le mélange de peroxyde de lithium et d'alumine a lieu dans une quantité qui est proche du rapport stoechiométrique des mêmes composés pour la formation d'aluminate de lithium.

3. Un procédé selon la revendication 2, dans lequel, dans ledit rapport presque stoechiométrique, la teneur en $Li_2O_2$ est légèrement en excès par rapport à $Al_2O_3$.

4. Un procédé selon la revendication 1, dans lequel ledit mélange de $Li_2O_2$ plus $Al_2O_3$ plus éthanol anhydre a lieu dans un évaporateur rotatif.

5. Un procédé selon la revendication 1, dans lequel ladite alumine comprend des sphères très pures dont la teneur en alumine est égale ou supérieure à 99,9%.

6. Un procédé selon la revendication 1, dans lequel ledit chauffage a lieu à une température inférieure à 100°C.

7. Un procédé selon la revendication 1, dans lequel ledit vide est compris à l'intérieur de la plage qui est normale pour les pompes rotatives.

8. Un procédé selon la revendication 1, dans lequel ledit poids d'acide stéarique est de deux pour cent par rapport au poids total dudit mélange anhydre.

9. Un procédé selon la revendication 1, dans lequel ledit produit de calcination est soumis à la compression à froid à la pression de 2 tonnes par centimètre carré.

10. Un procédé selon la revendication 1, dans lequel le frittage dudit mélange de $Li_2O_2$ plus $Al_2O_3$ plus acide stéarique a lieu dans un four à chauffage rapide à la température de 1300°C pendant deux heures.

11. Un procédé selon la revendication 1, dans lequel ladite calcination a lieu dans des récipients faits d'alumine pure à 99,9% et dure pendant deux heures à 700°C.

12. Un article en aluminate de lithium préparé par le procédé selon les revendications précédentes, à partir d'une poudre contenant au moins 99,9% de phase gamma et possédant une surface spécifique d'au moins 30 $m^2/g$ et ayant une forme de grain de type lamellaire et une dimension de grain de l'ordre d'environ un micromètre; l'article ayant une densité par rapport à la densité théorique de 90%±2, une porosité ouverte égale à 10%±2 et comprenant du gamma $LiAlO_2$ tel que détectable par diffraction des rayons X.

13. Article en aluminate de lithium selon les revendications précédentes, se présentant sous la forme de boulettes.

% of total porosity

pore diameters (micron)

*FIG. 2*

*FIG. 1*

1

*FIG. 3a*

*FIG. 3b*

FIG. 4.